# EUROPEAN PATENT APPLICATION

(11) **EP 4 682 134 A1**
(43) Date of publication of application: **21.01.2026**
(21) Application number: 24189165.4
(22) Date of filing: 17.07.2024
(51) Int. Cl.: C05C 1/00, C05C 3/00, C05C 5/00, C05C 5/02, C05C 9/00, C05F 11/10, C05G 5/12, A01N 65/00

(54) **FERTILIZER PARTICLE COMPRISING BIOSTIMULANT**

(71) Applicant: Yara International ASA, 0277 Oslo (NO)
(72) Inventor: Nkebiwe, Peteh Mehdi, 48249 Dülmen (DE); Becerra, Andres Felipe Rangel, 48249 Dülmen (DE); Torres Dorante, Luis Omar, 48249 Dülmen (DE); Donkers, Ellen Henrica Diana, 4533 HS TERNEUZEN (NL)
(74) Representative: AWA Sweden AB

(57) **Abstract**

The present invention relates to a fertilizer particle. The fertilizer particle comprises from 1.0 to 30 weight% of nitrogen, based on the total weight of the fertilizer particle, and from 0.0001 to 5.0 weight% of a biostimulant, based on the total weight of the fertilizer particle, wherein the fertilizer particle is homogeneous.

## Description

### Field of the disclosure

The present disclosure is related to the field of fertilizers, in particular fertilizer products comprising ammonium nitrate.

### Background information

Nitrogen is one of the most important nutrients required by plants to grow. It is involved in a number of physiological processes, such as chlorophyll synthesis and protein synthesis, which are crucial for the development of a plant.

Nitrogen can be found in soils in different forms, but the most important forms for agriculture are ammonium and nitrate ions. Nitrate ions are the preferred source of nitrogen for most agricultural plants, which they can absorb through their roots. Ammonium ions can also be absorbed although at a slower rate.

Soils naturally contain a lot of microorganisms, such as bacteria and fungi, and some of them are capable of transforming ammonium into nitrate, whereas others can transform nitrate into other nitrogen forms, such as nitrous oxide.

Ammonium nitrate-based fertilizers are commonly used today in agriculture and have several advantages: high nitrogen content (usually around 25-27 weight%), and fast release of nitrogen in the soil due to high water solubility.

Other nitrogen-containing fertilizers include NPK fertilizers, which comprise nitrogen, phosphorus, and potassium. NPK fertilizers often contain nitrogen in the form of ammonium ions and/or nitrate ions.

Recently, a new type of agricultural inputs has been discovered: biostimulants. Biostimulants are organic compounds that trigger positive physiological changes in plants. Biostimulants can be absorbed by the roots or leaves of a plant and they interact with enzymes present in the plant and in the soil, to modify the plant's behavior.

Biostimulants can have many different advantages, such as increasing nutrient use efficiency, solubilizing nutrients in soil, and improving resistance to abiotic stresses. So, there is a need to combine biostimulants with nitrogen-containing fertilizers into a single solid product.

### Summary of the disclosure

It has been found that it is possible to prepare homogeneous fertilizer particles comprising a biostimulant. The biostimulant is added during the fertilizer production process and is evenly distributed within the fertilizer. This ensures that the biostimulant is released at the same time as the nutrient comprised in the fertilizer.

The biostimulant can increase one or more parameters of plants, such as shoot dry matter, root dry matter, leaf area, and phosphorus use efficiency.

In a first aspect, the present disclosure provides a fertilizer particle comprising:
- from 1.0 to 30 weight% of nitrogen, based on the total weight of the fertilizer particle, and
- from 0.0001 to 5.0 weight% of a biostimulant, based on the total weight of the fertilizer particle,
wherein the fertilizer particle is homogeneous.

In another aspect, the present disclosure provides a method for producing homogeneous fertilizer particles, the method comprising:
- providing a molten material comprising nitrogen;
- adding a biostimulant in the molten material, such that the homogeneous fertilizer particles obtained in the method comprise from 0.0001 to 5.0 weight% of the biostimulant, based on the total weight of the homogeneous fertilizer particles;
- optionally, mixing the molten material comprising the biostimulant; and
- processing the molten material into homogenous fertilizer particles.

### Detailed description of the disclosure

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

All references cited in this description are hereby deemed to be incorporated in their entirety by way of reference.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20 % or less, in particular +/-10 % or less, more in particular +/-5 % or less, even more in particular +/-1 % or less, and still more in particular +/-0.1 % or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g., component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "weight percent", "%wt" or "weight%", here and throughout the description unless otherwise defined, refers to the relative weight of the respective component based on the overall weight of the formulation.

In a first aspect, the present disclosure provides a fertilizer particle comprising:
- from 1.0 to 30 weight% of nitrogen, based on the total weight of the fertilizer particle, and
- from 0.0001 to 5.0 weight% of a biostimulant, based on the total weight of the fertilizer particle,
wherein the fertilizer particle is homogeneous.

The presence of the biostimulant in the particle provides new benefits and/or improves known benefits to the plant receiving the fertilizer effect, such as increasing the nutrient use efficiency. The nutrient use efficiency measures the amount of nutrient absorbed by a plant compared to the amount of nutrient supplied to it as fertilizer.

Nitrogen is the main nutrient required by plants to grow, it is involved in several key mechanisms, such as chlorophyll synthesis and protein synthesis. Nitrogen is mainly applied in four forms: urea, ammonium ions, nitrate ions, and organic sources, such as proteins. Nitrate ions are readily absorbed by plants and represent a fast-acting source of nitrogen. Ammonium ions and urea need to be transformed into nitrate before being available to the plants. These transformations are catalyzed by enzymes and bacteria found in soil. Organic sources require a more complex transformation and represent a slow-acting source of nitrogen.

Today, biostimulants are often applied as a single product, often a liquid product. This increases the number of operations for a farmer and is not optimal. Inorganic fertilizers, such as those comprising urea, ammonium ions, or nitrate ions, are produced using high temperature processes, at 120 °C or above. Such conditions have been considered unsuitable for biostimulants, which are often complex organic molecules, prone to decomposition at such high temperatures.

However, it was found that several types of biostimulants could be added to the production process of nitrogen-containing fertilizer to obtain a fertilizer comprising nitrogen and a biostimulant.

As used herein, a homogeneous material relates to a material where the local concentration in different elements is identical in all parts of the material. However, the material may not necessarily be monophasic, i.e., it may contain chemical compounds in different states. For example, a fertilizer particle may comprise a main component, also called a matrix, and solid particles of a different material evenly distributed within the matrix. Such a fertilizer particle would be considered homogeneous for the purpose of this disclosure if the solid particles are equally distributed within the fertilizer particle.

In some embodiments, the fertilizer particle is produced from a melt comprising from 1.0 to 30 weight% of nitrogen, based on the total weight of the fertilizer particle, and from 0.0001 to 5.0 weight% of a biostimulant, based on the total weight of the melt.

In some embodiments, the fertilizer particle comprises from 5.0 to 30 weight%, from 6.0 to 30 weight%, from 7.0 to 30 weight%, from 8.0 to 30 weight%, from 9.0 to 30 weight%, from 10 to 30 weight%, from 5.0 to 30 weight%, from 6.0 to 30 weight%, from 7.0 to 30 weight%, from 8.0 to 30 weight%, from 9.0 to 30 weight%, from 10 to 30 weight%, from 5.0 to 25 weight%, from 6.0 to 25 weight%, from 7.0 to 25 weight%, from 8.0 to 25 weight%, from 9.0 to 25 weight%, or from 10 to 25 weight% of nitrogen, based on the total weight of the fertilizer particle.

In some embodiments, the biostimulant comprises at least one element selected from the group consisting of a humic acid, a fulvic acid, a seaweed extract, an amino acid, a peptide comprising at least two amino acids, a polysaccharide, a lignosulfonate, and mixtures thereof. It was found that different types of biostimulants were suitable to be added in a fertilizer production process.

Lignosulfonate compounds are by-products of the paper industry. These compounds are polymers and may be highly branched polymers comprising phenyl propane units, which have a broad distribution of size. Lignosulfonates comprise sulfonate groups and can comprise sodium, potassium, or calcium as counter-ions. It has been observed that lignosulfonate compounds comprised in fertilizer particles can increase one or more parameters of plants, such as shoot dry matter, root dry matter, leaf area, and phosphorus use efficiency.

In some embodiments, the biostimulant comprises a lignosulfonate compound, in particular a calcium lignosulfonate.

Amino-acids and peptides comprising amino-acids may also be used as biostimulants. Peptides and amino-acids can be obtained from a variety of sources, including animal sources, such as meat-bone-meal, and vegetable sources, such as soybean meal. It has been observed that amino-acids and peptides comprised in fertilizer particles can increase one or more parameters of plants, such as shoot dry matter, root dry matter, leaf area, and phosphorus use efficiency

In some embodiments, the biostimulant comprises a protein hydrolysate. A protein hydrolysate is a composition obtained by hydrolysis of proteins. A protein hydrolysate comprises amino-acids and peptides of various length, for example from 2 to 20 amino-acids. A protein hydrolysate may be of vegetable origin, animal origin, or a mixture of both. It has been observed that protein hydrolysate comprised in fertilizer particles can increase one or more parameters of plants, such as shoot dry matter, root dry matter, leaf area, and phosphorus use efficiency.

In some embodiments, the fertilizer particle comprises from 0.001 to 1.0 weight% of a protein hydrolysate, based on the total weight of the fertilizer particle.

Humic and fulvic acids may be obtained from the process of leonardite, which is a natural raw material from the decomposition of organic matter. Humic and/or fulvic acids may be present as a salt. Humic and fulvic acids are complex organic molecules comprising carboxylic acid groups, so humic and fulvic salts, also called humate and fulvate, can be prepared by mixing the acid with a base. It has been observed that humic and fulvic acids comprised in fertilizer particles can increase one or more parameters of plants, such as shoot dry matter, root dry matter, leaf area, and phosphorus use efficiency

In some embodiments, the fertilizer particle comprises from 0.001 to 1.0 weight% of a mixture of humic and fulvic acids, based on the total weight of the fertilizer particle.

In some embodiments, the biostimulant comprises a polysaccharide, in particular wherein the polysaccharide is chitosan. Chitosan is a linear polysaccharide produced by several marine species, such as shrimp, lobster, and crab. It comprises β-linked D-glucosamine and N-acetyl-D-glucosamine. It has been observed that polysaccharides, such as chitosan, comprised in fertilizer particles can increase one or more parameters of plants, such as shoot dry matter, root dry matter, leaf area, and phosphorus use efficiency

In some embodiments, the fertilizer particle comprises from 0.0001 to 0.1 weight%, from 0.0005 to 0.1 weight%, from 0.001 to 0.1 weight%, from 0.0001 to 0.01 weight%, from 0.0005 to 0.01 weight%, or from 0.001 to 0.01 weight% of a polysaccharide, in particular wherein the polysaccharide is chitosan, based on the total weight of the fertilizer particle. It was observed that polysaccharides, such as chitosan, provided one or more beneficial effects such as shoot dry matter, root dry matter, leaf area, and phosphorus use efficiency, at very low loading, for example as low as 0.0001 weight%.

In some embodiments, the fertilizer particle comprises at least one calcium-containing filler selected from the group consisting of dolomite, lime, calcium carbonate, and mixtures thereof. Calcium-containing filler materials are used in some fertilizer production processes, in particular processes for producing an ammonium nitrate-based fertilizer. Ammonium nitrate is a very good fertilizer material since it contains a high proportion of nitrogen and it is easily absorbed by plants. However, pure ammonium nitrate and compositions containing at least 80 weight% of ammonium nitrate are highly explosive. To reduce the explosive risk during production, storage, transport, and use, a non-reactive filler is often added to the production process. It has been found that calcium-containing fillers, such as dolomite, lime, and calcium carbonate, are suitable to be used. These fillers significantly reduce the explosive risk of the fertilizer. In addition, these fillers advantageously contain nutrients, such as calcium and optionally magnesium, required by plants.

In some embodiments, the fertilizer particle comprises from 1.0 to 30 weight%, from 5.0 to 30 weight%, from 10 to 30 weight%, from 1.0 to 25 weight%, from 5.0 to 25 weight%, or from 10 to 30 weight% of the at least one calcium-containing filler, based on the total weight of the fertilizer particle.

In some embodiments, the fertilizer particle comprises one, two, or three element(s) selected from the group consisting of ammonium ions, nitrate ions, and urea.

In some embodiments, the fertilizer particle comprises urea.

In some embodiments, the fertilizer particle comprises nitrate ions. In some embodiments, the fertilizer particle comprises calcium nitrate.

In some embodiments, the fertilizer particle comprises ammonium ions.

In some embodiments, the fertilizer particle comprises ammonium and nitrate ions, in particular wherein the fertilizer particle comprises ammonium nitrate.

In some embodiments, the fertilizer particle comprises one or more element(s) selected from the group consisting of phosphorus, potassium, sulfur, magnesium, boron, copper, iron, manganese, molybdenum, zinc, and mixtures thereof. Phosphorus and potassium are the two other macronutrients, in addition to nitrogen, required by plants. Sulfur, magnesium, and calcium are called secondary nutrients. Boron, copper, iron, manganese, molybdenum, and zinc are called micronutrients.

In some embodiments, the fertilizer particle further comprises one or more components selected from the group consisting of magnesium sulfate, sodium nitrate, potassium nitrate, magnesium nitrate, aluminum sulfate, struvite, biotite, and mixtures thereof. These components can be used in fertilizers, in particular ammonium nitrate-based fertilizer, to provide secondary nutrients and micronutrients and to improve the physical properties, such as caking tendency, dusting tendency, particle strength, and water absorption, of the fertilizer particle.

In some embodiments, the fertilizer particle comprises from 0.001 to 5.0 weight%, from 0.005 to 5.0 weight%, from 0.01 to 5.0 weight%, from 0.05 to 5.0 weight%, from 0.1 to 5.0 weight%, from 0.5 to 5.0 weight%, from 1.0 to 5.0 weight%, from 0.001 to 3.0 weight%, from 0.005 to 3.0 weight%, from 0.01 to 3.0 weight%, from 0.05 to 3.0 weight%, from 0.1 to 3.0 weight%, from 0.5 to 3.0 weight%, from 1.0 to 3.0 weight%, from 0.001 to 1.0 weight%, from 0.005 to 1.0 weight%, from 0.01 to 1.0 weight%, from 0.05 to 1.0 weight%, from 0.1 to 1.0 weight%, or from 0.5 to 1.0 weight% of the biostimulant, based on the total weight of the fertilizer particle. It has been found that some biostimulants provide significant effects at very low loading, for example less than 0.1 weight%.

In some embodiments, the fertilizer particle comprises from 0.001 to 1.0 weight%, from 0.005 to 1.0 weight%, from 0.01 to 1.0 weight%, from 0.05 to 1.0 weight%, from 0.1 to 1.0 weight%, or from 0.5 to 1.0 weight% of chitosan, based on the total weight of the fertilizer particle.

In some embodiments, the fertilizer particle comprises from 5.0 to 30 weight% of nitrogen, based on the total weight of the fertilizer particle, the nitrogen being present as ammonium nitrate, and from 0.0001 to 5.0 weight% of a protein hydrolysate, based on the total weight of the fertilizer particle.

In some embodiments, the fertilizer particle comprises from 1.0 to 20 weight% of nitrogen, from 1.0 to 20 weight% of phosphorus, from 1.0 to 20 weight% of potassium, and from 0.0001 to 5.0 weight% of a protein hydrolysate, based on the total weight of the fertilizer particle.

In some embodiments, the fertilizer particle comprises from 1.0 to 20 weight% of nitrogen, from 1.0 to 20 weight% of phosphorus, from 1.0 to 20 weight% of potassium, and from 0.0001 to 5.0 weight% of a polysaccharide, in particular wherein the polysaccharide is chitosan, based on the total weight of the fertilizer particle.

In some embodiments, the fertilizer particle comprises from 1.0 to 20 weight% of nitrogen, from 1.0 to 20 weight% of phosphorus, from 1.0 to 20 weight% of potassium, and from 0.0001 to 5.0 weight% of a lignosulfonate, in particular wherein the lignosulfonate is calcium lignosulfonate, based on the total weight of the fertilizer particle.

In some embodiments, the fertilizer particle comprises from 1.0 to 20 weight% of nitrogen, from 1.0 to 20 weight% of phosphorus, from 1.0 to 20 weight% of potassium, and from 0.0001 to 5.0 weight% of mixture of humic acids and fulvic acids, based on the total weight of the fertilizer particle.

In some embodiments, the fertilizer particle comprises at least 1.0 weight%, at least 5.0 weight%, or at least 10 weight% of nitrogen.

In some embodiments, the fertilizer particle comprises at least 1.0 weight%, at least 5.0 weight%, or at least 10 weight% of phosphorus.

In some embodiments, the fertilizer particle comprises at least 1.0 weight%, at least 5.0 weight%, or at least 10 weight% of potassium.

In some embodiments, the fertilizer particle comprises at least 1.0 weight% of nitrogen, at least 1.0 weight% of phosphorus, and at least 1.0 weight% of potassium.

In some embodiments, the fertilizer particle comprises at least 5.0 weight% of nitrogen, at least 5.0 weight% of phosphorus, and at least 5.0 weight% of potassium.

In some embodiments, the fertilizer particle comprises from 1.0 to 20 weight% of nitrogen, from 1.0 to 20 weight% of phosphorus, and from 1.0 to 20 weight% of potassium.

In some embodiments, the nitrogen is present as ammonium nitrate, and of the biostimulant is a protein hydrolysate.

In some embodiments, the fertilizer particle further comprises from 1.0 to 20 weight% of phosphorus, and from 1.0 to 20 weight% of potassium, and the biostimulant is a protein hydrolysate.

In some embodiments, the fertilizer particle further comprises from 1.0 to 20 weight% of phosphorus, and from 1.0 to 20 weight% of potassium, and the biostimulant is a polysaccharide, in particular wherein the polysaccharide is chitosan.

In some embodiments, the fertilizer particle further comprises from 1.0 to 20 weight% of phosphorus, and from 1.0 to 20 weight% of potassium, and the biostimulant is a lignosulfonate, in particular wherein the lignosulfonate is calcium lignosulfonate.

In some embodiments, the fertilizer particle further comprises from 1.0 to 20 weight% of phosphorus, and from 1.0 to 20 weight% of potassium, and the biostimulant is a mixture of humic acids and fulvic acids.

In some embodiments, the fertilizer particle further comprises from 10 to 20 weight% of phosphorus, and from 10 to 20 weight% of potassium, and the biostimulant is a protein hydrolysate.

In some embodiments, the fertilizer particle further comprises from 10 to 20 weight% of phosphorus, and from 10 to 20 weight% of potassium, and the biostimulant is a polysaccharide, in particular wherein the polysaccharide is chitosan.

In some embodiments, the fertilizer particle further comprises from 10 to 20 weight% of phosphorus, and from 10 to 20 weight% of potassium, and the biostimulant is a lignosulfonate, in particular wherein the lignosulfonate is calcium lignosulfonate.

In some embodiments, the fertilizer particle further comprises from 10 to 20 weight% of phosphorus, and from 10 to 20 weight% of potassium, and the biostimulant is a mixture of humic acids and fulvic acids.

In some embodiments, the fertilizer particle has a particle size ranging from 0.1 to 5.0 mm.

In another aspect, the present disclosure provides a method for producing homogeneous fertilizer particles, the method comprising:
- providing a molten material comprising nitrogen;
- adding a biostimulant in the molten material, such that the homogeneous fertilizer particles obtained in the method comprise from 0.001 to 5.0 weight% of the biostimulant, based on the total weight of the homogeneous fertilizer particles, thereby obtaining a molten material comprising a biostimulant;
- optionally, mixing the molten material comprising a biostimulant; and
- processing the molten material into homogenous fertilizer particles.

In order to produce fertilizer particles at a high rate, at several hundreds of kilos a day, production methods using molten materials have been developed. Molten materials can be converted into a solid particulate compositions with a variety of methods and devices, such as prilling tower, pan granulator, fluidized bed granulator, drum granulator, spherodizer, and pugmill. The particles made by these methods have the same chemical composition as the molten material.

In the present method, a molten material comprising nitrogen is provided. The molten material may comprise one or more element(s) selected from the group consisting of urea, ammonium ions, and nitrate ions. In some embodiments, the molten material comprises one or more element(s) selected from the group consisting of urea, ammonium nitrate, ammonium phosphate, calcium nitrate, potassium nitrate, and mixtures thereof.

In some embodiments, the starting molten material comprises at least 50 weight%, or from 50 to 99 weight%, of calcium nitrate.

In some embodiments, the starting molten material comprises at least 50 weight%, or from 50 to 99 weight%, of ammonium nitrate.

In some embodiments, the starting molten material comprises nitrogen, phosphorus, and potassium.

In some embodiments, the starting molten material comprises at least 1.0 weight%, at least 5.0 weight%, or at least 10 weight% of nitrogen.

In some embodiments, the starting molten material comprises at least 1.0 weight%, at least 5.0 weight%, or at least 10 weight% of phosphorus.

In some embodiments, the starting molten material comprises at least 1.0 weight%, at least 5.0 weight%, or at least 10 weight% of potassium.

In some embodiments, the starting molten material comprises at least 1.0 weight% of nitrogen, at least 1.0 weight% of phosphorus, and at least 1.0 weight% of potassium.

In some embodiments, the starting molten material comprises at least 5.0 weight% of nitrogen, at least 5.0 weight% of phosphorus, and at least 5.0 weight% of potassium.

In some embodiments, the starting molten material comprises from 1.0 to 20 weight% of nitrogen, from 1.0 to 20 weight% of phosphorus, and from 1.0 to 20 weight% of potassium.

A biostimulant is added to the molten material. In some embodiments, the biostimulant is added as a mixture of biostimulants. Some types of biostimulants, for example peptides, are not easily available as unique compounds, but as a mixture, for example a peptide mixture comprising more than one unique peptide.

Surprisingly, it was found that biostimulants, such as humic acids, fulvic acids, seaweed extracts, amino acids, peptides comprising at least two amino acids, polysaccharides, and lignosulfonates, were able to retain their biostimulant activity after being added to a melt at temperatures above 100 °C.

In some embodiments, the biostimulant is added as a dry composition, for example a dry powder. In some embodiments, the biostimulant is added as a liquid composition, for example an aqueous solution or an aqueous suspension.

In some embodiments, the biostimulant comprises chitosan and is added as an aqueous solution.

In some embodiments, the biostimulant comprises protein hydrolysate, in particular vegetable protein hydrolysate, and is added as a dry powder or an aqueous solution.

The molten material comprising a biostimulant may be mixed to become homogeneous, meaning that the biostimulant is evenly distributed within the molten material. Some production techniques, such as prilling and spherodizing, require a homogeneous molten material to produce homogenous particles, whereas other techniques, such as fluidized bed granulation do not require a homogeneous molten material to produce homogenous particles because the production technique homogenizes the composition during its production, for example in the fluidized bed process, due to spraying the molten material.

Once the desired molten material comprising nitrogen is obtained, the molten material comprising nitrogen is processed, for example using a prilling tower, a granulator, a spherodizer, or a pugmill, to obtain fertilizer particles.

In some embodiments, the homogeneous fertilizer particles obtained in the method of the present disclosure have a particle size ranging from 0.1 to 5.0 mm. Modern agriculture machinery, in particular fertilizer spreaders, is often configured to manipulate fertilizer particles having a size of a few millimeters.

In some embodiments, the processing of molten material comprises producing homogeneous particles using a device selected from the group consisting of a prilling tower, a pan granulator, a fluidized bed granulator, a drum granulator, a spherodizer, and a pugmill.

In some embodiments, the homogeneous fertilizer particles obtained from the processing of molten material are coated with a coating composition. Coating compositions may be applied to fertilizer particles to modify their chemical composition and/or to improve their physical properties, such as particle strength, caking property, dusting property, and swelling property.

In some embodiments, the homogeneous fertilizer particles obtained from the processing are fertilizer particles according to the first aspect of the present disclosure.

### Example 1

A molten material comprising 77 weight% of ammonium nitrate and 22 weight% of dolomite was prepared and maintained at around 160 °C. Various biostimulants were added in the molten material comprising nitrogen (see table 1), which was stirred for 5 min, before being cooled on a plate and broken down in small pieces with a size below 5.0 mm.

**Table 1**

| **Entry** | **Additive** | **Amount (per kg of fertilizer)** | **Amount (weight%)** |
|---|---|---|---|
| 1 | Vegetable protein hydrolysate (dry) | 0.375 g | 0.0375 |
| 2 | Vegetable protein hydrolysate (dry) | 1.5 g | 0.15 |
| 3 | Vegetable protein hydrolysate (dry) | 5.5 g | 0.55 |
| 4 | Vegetable protein hydrolysate (aqueous solution, 50 weight% of dry matter) | 0.75 mL | 0.0375 |
| 5 | Vegetable protein hydrolysate (aqueous solution, 50 weight% of dry matter) | 3.0 mL | 0.15 |
| 6 | Vegetable protein hydrolysate (aqueous solution, 50 weight% of dry matter) | 11 mL | 0.55 |

The solids were then tested in an agronomic trial: maize was seeded in a 7.5 L pot containing 9.0 kg of substrate. The substrate comprised 70 weight% of fine quartz sand and 30 weight% of low fertility soil. Low fertility conditions were established to ensure an ideal environment for testing of the fertilizer products. Pots were watered to field capacity prior to sowing and then watered three times a week throughout the trial. The trial was placed in a controlled environment glasshouse allowing for full control of light and temperature. Temperature was maintained at 20-25°C for 16 hours during the day and 16-18°C for 8 hours at night.

Four seeds were initially sown per pot to a depth of 2.5 to 3.0 cm. There were 5 replicates per treatment arranged in randomized complete block design (RCBD). At 15 DAS (Days After Sowing), pots were thinned to just the two strongest plants, the majority of plants were at growth stage 13 (BBCH13) when thinned. The pots received 50 % of the ammonium nitrate fertilizers (with or without biostimulant) and 50% of the remaining macro and micronutrients at 15 Days after sowing (DAS). The pots received the remaining 50% ammonium nitrate fertilizer (with or without biostimulant), and 50% macro and micronutrients at 30 DAS. The sum of nutrient application rates were: N (with or without biostimulant, 20 mg N/kg), and macro and micronutrients (P, K, Mg, Ca, S, Fe, Mn, Zn, B, Cu, Mo at 20, 85, 12, 40, 62, 3.8, 2.6, 0.5, 0.5, 0.5 and 0.1 mg/kg, respectively). Plants were harvested at 50 DAS, partitioned, dried, and stored for later laboratory analyses.

The dry matter of the shoots was measured and the results are summarized in table 2.

**Table 2**

| **Entry** | Shoot Dry Matter (g/plant) |
|---|---|
| 0 (no biostimulant) | 2.6 |
| 1 | 4.3 |
| 2 | 4.5 |
| 3 | 4.2 |
| 4 | 4.1 |
| 5 | 4.4 |
| 6 | 4.2 |

It can be seen that all the fertilizers comprising the biostimulant perform better than the control without any biostimulant.

### Example 2

A molten material comprising 16 weight% of nitrogen, 16 weight% of phosphorus (expressed as P₂O), and 16 weight% of potassium (expressed as K₂O) was prepared. Various biostimulants were added in the molten material comprising nitrogen (see table 3), which was stirred for 5 min, before being cooled on a plate and broken down in small pieces with a size below 5.0 mm.

**Table 3**

| **Entry** | **Additive** | **Amount (per kg of fertilizer)** | **Amount (weight%)** |
|---|---|---|---|
| 1 | Mixture of humic acid and fulvic acid | 0.75 g | 0.075 |
| 2 | Mixture of humic acid and fulvic acid | 3.0 g | 0.3 |
| 3 | Vegetable protein hydrolysate (aqueous solution, 50 weight% of dry matter) | 0.75 mL | 0.0375 |
| 4 | Vegetable protein hydrolysate (aqueous solution, 50 weight% of dry matter) | 3.0 mL | 0.15 |
| 5 | Chitosan solution (1 weight% aqueous solution) | 0.75 mL | 0.00075 |
| 6 | Chitosan solution (1 weight% aqueous solution) | 3.0 mL | 0.0003 |
| 7 | Calcium lignosulfonate (50 weight% aqueous solution) | 0.75 mL | 0.0375 |
| 8 | Calcium lignosulfonate (50 weight% aqueous solution) | 3.0 mL | 0.15 |

The solids were then tested in a scientific agronomic trial: Maize plants are grown in a controlled greenhouse in 10 L pots filled with 70% sand and 30% low-P soil (wt/wt). 50% supply of micronutrients were applied by 100 ml/pot of drenched nutrient solution during soil preparation. Fertilizer modality is applied before sowing, by mixing it in the entire substrate volume. Sowing of 5 seeds/pot, covered with 3 cm of substrate, thinned to 2 plants per pot at 10-15 DAS. There were 10 replicates per treatment arranged in RCBD. At 20 DAS: Supplementary N fertilization was applied to 100% of the plant requirement and accompanied with spot irrigation to drench the nutrients into the soil. The sum of nutrient application rates were: NPK (with or without biostimulant, 150, 15 and 253 mg/kg, N, P and K respectively), and other macro and micronutrients (Mg, Ca, S, Cl, Fe, Mn, Zn, B, Cu, Mo at 12, 200, 70, 83, 7.7, 5.1, 1.1, 1.0, 1.1 and 0.26 mg/kg, respectively). The first set of 5 replicates was harvested at 35 DAS and the remaining set of 5 replicates at 62 DAS, partitioned, dried, and stored for later laboratory analyses.

Different parameters were measured and the results are summarized in table 4.

**Table 4**

| **Entry** | **Leaf area (canopeo index) 35 DAS** | **P deficiency test 35 DAS** | **Shoot dry matter at 62 DAS (g/plant)** | **Root dry matter at 62 DAS (g/plant)** |
|---|---|---|---|---|
| 0 (no biostimulant) | 1.3 | 48 | 4.7 | 0.8 |
| 1 | 1.6 | 46 | 6.0 | 0.9 |
| 2 | 1.7 | 46 | 5.7 | 0.8 |
| 3 | 1.6 | 48 | 7.7 | 0.9 |
| 4 | 1.5 | 40 | 5.7 | 1.0 |
| 5 | 1.8 | 36 | 7.0 | 1.1 |
| 6 | 1.8 | 46 | 6.0 | 1.0 |
| 7 | 2.0 | 47 | 5.7 | 0.9 |
| 8 | 1.9 | 23 | 9.1 | 1.4 |

The leaf area, shoot dry matter, and root dry matter should be as high as possible, whereas the P deficiency test should be as low as possible. It can be seen that all the fertilizer comprising a biostimulant perform better than the control in one or more categories.

The P deficiency test indicates the deficit of phosphorus in the plant: a lower test score indicates that the plant absorbed more of the phosphorus provided by the fertilizer, i.e., an increased nutrient use efficiency.

## Claims

1. A fertilizer particle comprising:
- from 1.0 to 30 weight% of nitrogen, based on the total weight of the fertilizer particle, and
- from 0.0001 to 5.0 weight% of a biostimulant, based on the total weight of the fertilizer particle,
wherein the fertilizer particle is homogeneous.

2. The fertilizer particle according to claim 1, wherein the biostimulant comprises at least one element selected from the group consisting of a humic acid, a fulvic acid, a seaweed extract, an amino acid, a peptide comprising at least two amino acids, a polysaccharide, a lignosulfonate, and mixtures thereof.

3. The fertilizer particle according to claim 1 or 2, further comprising at least one calcium-containing filler selected from the group consisting of dolomite, lime, calcium carbonate, and mixtures thereof.

4. The fertilizer particle according to claim 3, comprising from 1.0 to 30 weight% of the at least one calcium-containing filler, based on the total weight of the fertilizer composition.

5. The fertilizer particle according to any one of claims 1 to 4, comprising one, two, or three element(s) selected from the group consisting of ammonium ions, nitrate ions, and urea.

6. The fertilizer particle according to any one of claims 1 to 5, further comprising one or more element(s) selected from the group consisting of phosphorus, potassium, sulfur, magnesium, boron, copper, iron, manganese, molybdenum, zinc, and mixtures thereof.

7. The fertilizer particle according to any one of claims 1 to 6, comprising from 0.001 to 5.0 weight%, in particular from 0.1 to 5.0 weight%, more in particular from 0.1 to 4.0 weight% of the biostimulant, based on the total weight of the fertilizer particle.

8. The fertilizer particle according to any one of claims 1 to 7, wherein the nitrogen is present as ammonium nitrate, and of the biostimulant is a protein hydrolysate.

9. The fertilizer particle according to any one of claims 1 to 8, further comprising from 1.0 to 20 weight% of phosphorus, and from 1.0 to 20 weight% of potassium, and wherein the biostimulant is a protein hydrolysate.

10. The fertilizer particle according to any one of claims 1 to 9, further comprising from 1.0 to 20 weight% of phosphorus, and from 1.0 to 20 weight% of potassium, and wherein the biostimulant is a polysaccharide, in particular wherein the polysaccharide is chitosan.

11. The fertilizer particle according to any one of claims 1 to 10, further comprising from 1.0 to 20 weight% of phosphorus, and from 1.0 to 20 weight% of potassium, and wherein the biostimulant is a lignosulfonate, in particular wherein the lignosulfonate is calcium lignosulfonate.

12. The fertilizer particle according to any one of claims 1 to 11, further comprising from 1.0 to 20 weight% of phosphorus, and from 1.0 to 20 weight% of potassium, and wherein the biostimulant is a mixture of humic acids and fulvic acids.

13. The fertilizer particle according to any one of claims 1 to 12, having a particle size ranging from 0.1 to 5.0 mm.

14. A method for producing homogeneous fertilizer particles, the method comprises:
- providing a starting molten material comprising nitrogen;
- adding a biostimulant in the starting molten material, such that the fertilizer particles obtained in the method comprise from 0.0001 to 5.0 weight% of the biostimulant, based on the total weight of the fertilizer particles, thereby obtaining a molten material comprising a biostimulant;
- optionally, mixing the molten material comprising the biostimulant; and
- processing the molten material into homogenous fertilizer particles.
